# FASCICULE DE BREVET EUROPEEN

(11) **EP 0 542 619 B1**
(45) Date de publication et mention de la délivrance du brevet: **26.07.1995**
(21) Numéro de dépôt: 92403038.0
(22) Date de dépôt: 10.11.1992
(51) Int. Cl.: B64D 43/00, F16F 15/08, G02F 1/13

(54) **Dispositif de fixation d'une glace sur un support soumis à vibrations notamment un écran de visualisation de planche de bord d'avion**
Vorrichtung zur Befestigung eines Glases an ein schwingendes Tragelement, insbesondere am Bildschirm eines Armaturenbretts
Device to fix a glass on a vibrating support, specially a display screen on a dashboard

(30) Priorité: 13.11.1991 FR 9113945
(43) Date de publication de la demande: 19.05.1993
(73) Titulaire: SEXTANT AVIONIQUE, F-92360 Meudon-la-Forêt (FR)
(72) Inventeur: Brunet, Pascal, F-75116 Paris (FR); Klaver, Jean Noel, F-75116 Paris (FR)
(74) Mandataire: Ballot, Paul Denis Jacques

(56) Documents cités:
- EP-A- 0 435 343
- FR-A- 2 379 087
- FR-A- 2 453 743

## Description

La présente invention concerne un dispositif et un procédé de fixation d'une glace entre deux éléments supports rigides formant des cadres, par l'intermédiaire de moyens de serrage mécaniques, et particulièrement destiné aux environnements vibratoires importants.

L'invention trouve son application notamment dans la mise en oeuvre d'écrans plats type LCD, électroluminescents etc.. dans des visualisations montées en planche de bord d'avions militaires et civils.

Bien entendu le domaine de l'invention peut être étendu aux lentilles d'ensembles optiques ou encore aux hublots, pare-brise, etc..

Dans ces applications destinées à des environnements particuliers, les glaces sont actuellement fixées par collage ou par pressage entre deux pièces mécaniques de maintien formant des cadres.

L'inconvénient majeur rencontré dans de tels modes d'assemblage est de ne pas pouvoir maîtriser les fréquences propres de vibrations de la glace, influencées directement par celles des matériaux utilisés pour l'assemblage, plus particulièrement ceux des éléments supports qui sont rigides et des moyens de fixation qui sont également rigides.

Il y a donc un risque que lesdites fréquences de la glace correspondent à celles d'un autre élément mécanique de l'ensemble de fixation, d'où couplage et emballement de celui-ci, pouvant conduire à la rupture de la glace en verre.

Bien entendu, dans l'élaboration de l'invention, on a d'abord pensé à intercaler un joint souple dans la feuillure des éléments supports rigides formant cadres, c'est-à-dire entre celle-ci et le pourtour de la glace en verre et ceci de part et d'autre.

Un dispositif selon ce concept est décrit dans la demande de brevet français FR-A-2 453 743 mais les essais en vibration ont démontré que si le joint souple remplissait bien un rôle amortisseur de vibrations et de dilatations différentielles entre le verre et le support, cela s'avérait bien souvent insuffisant dans la maîtrise des fréquences des vibrations dont la glace est le siège, car aucun contrôle des moyens de serrage agissant sur lesdits joints n'est possible et qui sont de ce fait comprimés plus ou moins, de façon aléatoire.

De manière à résoudre ce problème, l'invention propose non seulement de pouvoir désaccoupler les fréquences propres de la glace de celles des autres éléments mécaniques, mais également de pouvoir choisir adéquatement les fréquences de ladite glace en contrôlant son serrage et cela sans précaution particulière de l'opérateur qui au montage, pourra agir également sur les moyens de serrage mécaniques à leurs couples nominaux, sans risque de casser la glace, au cas où ces couples ne seraient pas respectés.

A cet effet, l'invention concerne un dispositif de fixation d'une glace en verre entre deux éléments supports rigides formant cadres par l'intermédiaire de moyens de serrage mécaniques, la glace étant pressée entre les deux éléments de support, par l'intermédiaire de deux joints souples périphériques disposés respectivement entre chacune des faces internes desdits éléments et une face correspondante de la glace et dont la compression est contrôlée en interposant entre les éléments supports, au moins une cale rigide sur laquelle viennent en butée lesdits éléments lors d'une action, à leur couple nominal, sur les moyens de serrage mécaniques caractérisé en ce que la cale rigide est d'épaisseur réglable, pour une compression choisie des joints souples, de manière telle à ajuster la fréquence propre du verre de la glace sans interférence avec les fréquences propres des autres pièces mécaniques.

Selon un mode de réalisation préférentiel, la cale rigide d'épaisseur réglable est constituée d'un feuilleté de tôles pelables, d'épaisseurs prédéterminées.

L' invention concerne également un procédé de montage pour la mise en oeuvre du dispositif, remarquable pour les étapes suivantes :
(a) Mise en place de la structure porteuse constituée par un premier élément support rigide formant cadre,
(b) Application d'un premier joint souple sur la face interne du premier élément support, dans une feuillure duquel il se loge,
(c) Mise en place d'une glace sur le premier joint,
(d) Mise en place d'une cale rigide d'épaisseur réglable constituée d'un feuilleté de tôles ou feuilles pelables, sur une face interne périphérique du premier élément support rigide,
(e) Application d'un second joint souple sur une face de la glace,
(f) Mise en place d'un second élément support rigide, dans une feuillure duquel se loge ledit second joint,
(g) Introduction de vis dans des trous traversant les premier et second éléments de support rigide ainsi que la cale, et
(h) Serrage des vis jusqu'à mise en butée des premier et second éléments de support rigide sur la cale, dont l'épaisseur est contrôlée en ôtant plus ou moins de feuilles.

L'invention sera mieux comprise et d'autres caractéristiques de celle-ci seront mises en évidence à l'aide de la description qui suit, en référence au dessin annexé, en illustrant, à titre d'exemple non limitatif, comment l'invention peut être réalisée et dans lequel :

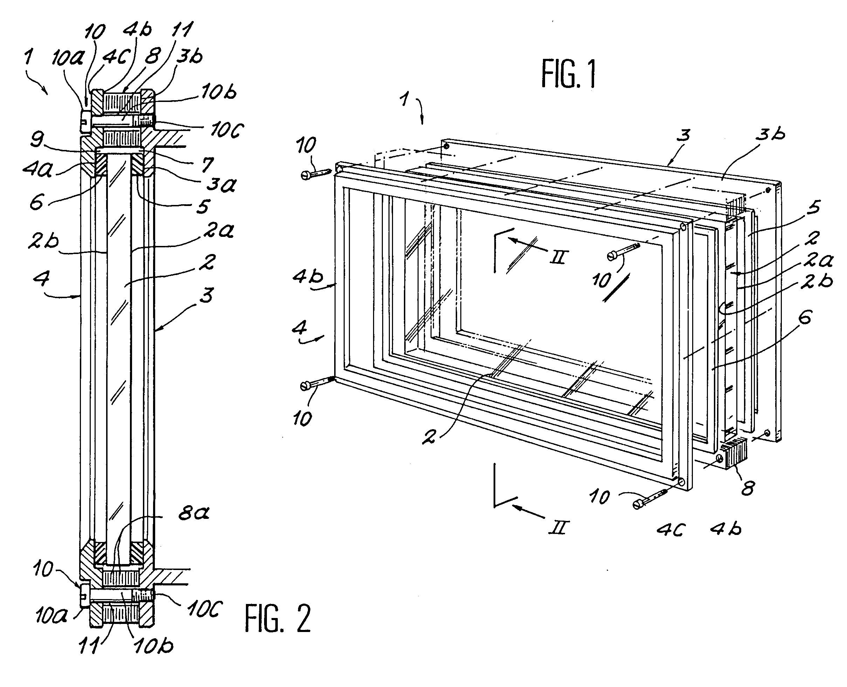

La figure 1 est une vue en perspective éclatée d'un dispositif de fixation d'une glace selon l'invention.
La figure 2 est une vue en coupe selon la ligne II de la figure 1, après assemblage des éléments.

A titre d'exemple, les figures représentent un dispositif de fixation 1 d'un écran plat 2 du type LCD particulièrement adapté aux visualisations montées en planche de bord d'avions militaire ou civil.

Selon un procédé de montage préférentiel du dispositif selon l'invention énoncé ci-dessus, celui-ci comporte une structure porteuse en aluminium constituée par un premier élément support rigide 3 formant un cadre rectangulaire sur lequel est déposée la glace 2 de forme identique mais de dimensions inférieures, par l'intermédiaire d'un premier joint périphérique souple 5 disposé dans une feuillure 7 de l'élément support 3 entre une zone périphérique de la face 2a de la glace 2 et une face interne 3a de l'élément support 3 constituant une partie de la feuillure 7.

Dans un ordre logique de montage une cale rigide 8 d'épaisseur réglable est disposée ensuite sur une face interne 3b de l'élément 3 à proximité de son pourtour extérieur.

Un second joint périphérique souple 6 identique au premier 5 est disposé sur une zone périphérique de la face 2b de la glace 2 et se loge dans une feuillure 9 d'un second élément support rigide 4, en acier, formant cadre et venant en recouvrement d'une part du joint 6 par une face interne 4a constituant une partie de sa feuillure 9 et d'autre part de la cale rigide 8, par sa face interne 4b située à proximité de son pourtour extérieur et en vis-à-vis de la face interne 3b de l'autre élément 3.

Les éléments constitutifs du dispositif 1 étant ainsi provisoirement disposés, des moyens de serrage mécaniques de l'ensemble sont mis en oeuvre.

Ils sont constitués de vis 10 en appui par leur tête 10a sur une face extérieure périphérique 4c de l'élément formant cadre 4, et dont leur corps 10b traverse ladite face 4c dudit élément 4 et la cale 8 par l'intermédiaire de trous de passage 11 traversant à la fois les éléments 3 et 4 et la cale 8.

Le serrage des vis 10 est alors successivement effectué par vissage de leurs extrémités filetées 10c dans des parties filetées correspondantes des trous 11 réalisées sur la périphérie de l'élément support 3.

Ce serrage est effectué selon l'invention sans précaution particulière, par action sur les vis 10 à leur couple nominal, amenant ainsi les éléments support 3 et 4 en butée sur la cale rigide 8, la valeur de leur déplacement et conséquemment de compression des joints 5, 6 étant contrôlée par l'épaisseur même de la cale rigide 8, elle-même déterminante pour un nombre de couches de feuilles de tôle 8a empilées les unes sur les autres pour constituer un ensemble feuilleté pelable à la demande, selon les cas de figures, et la côte d'épaisseur à obtenir.

Ces tôles 8a constituant la cale pelable 8 sont d'épaisseurs prédéterminées, en l'occurrence de 0,5 dixième de millimètre.

Elles sont solidaires entre elles par une substance faiblement adhésive apte à les rendre pelables et repositionnables.

Elles peuvent également être obtenues à partir de feuillards d'acier ou de cuivre.

Dans le présent exemple de réalisation, la cale pelable 8 est constituée d'un cadre de forme et de dimensions sensiblement identiques aux contours des éléments supports 3 et 4 et il est obtenu par découpe d'un flan de tôles feuilletées.

Néanmoins, il ne faut pas exclure que l'écartement désiré et donné par l'épaisseur ajustable de la cale pelable 8, puisse être obtenu par une pluralité d'entretoises (non représentées) réparties entre les éléments supports 3 et 4 sur leur pourtour 3b, 4b, au droit des moyens de serrage mécaniques, en l'occurrence les vis 10 qui les traverseraient. Ces entretoises seraient également obtenues, selon le principe de l'invention, par découpe dans un flan de tôles feuilletées.

On comprend aisément que, de cette manière, la maîtrise de l'épaisseur de la cale pelable 8, permet de contrôler la compression des joints souples 5 et 6 permettant par là d'ajuster la fréquence propre de vibration du verre, sans interférence avec les fréquences propres aux autres pièces mécaniques, telles les éléments supports 3 et 4. Dans le présent cas d'application l'épaisseur d'origine de la cale pelable 8 est de 1,6 mm et se pèle par couche de 0,05 mm.

Des essais en vibrations ont été effectués avec diverses épaisseurs de cale, après pelage.

Le tableau ci-dessous montre la variation de la fréquence propre de l'écran en verre 2 en fonction de l'épaisseur de cale.

| Epaisseur | I | Fréquence |
|---|---|---|
| 1,2 mm | I | 583 Hz |
| 1,3 mm | I | 525 Hz |
| 1,4 mm | I | 510 Hz |
| 1,5 mm | I | 453 Hz |

Ce dispositif garantit amplement la reproductibilité des caractéristiques mécaniques de l'écran 2 dans une production de série. En effet, les tolérances de fabrication des différentes pièces seront absorbées par les cales 8 d'épaisseur réglable, afin de garantir une réponse en fréquence identique pour chaque écran 2.

## Revendications

1. Dispositif de fixation (1) d'une glace en verre (2) entre deux éléments support rigides (3 et 4) formant cadres par l'intermédiaire de moyens de serrage mécaniques (10), la glace (2) étant pressée entre les deux éléments de support (3 et 4), par l'intermédiaire de deux joints souples périphériques (5) (6) disposés respectivement entre chacune des faces internes (3a, 4a) desdits éléments support (3, 4) et une face correspondante (2a, 2b) de la glace (2) et dont la compression est contrôlée en interposant entre les éléments supports (3, 4), au moins une cale rigide (8) sur laquelle viennent en butée lesdits éléments (3, 4) lors d'une action, à leur couple nominal, sur les moyens de serrage mécaniques (10), caractérisé en ce que la cale rigide est d'épaisseur réglable pour une compression choisie des joints souples (5, 6), de manière telle à ajuster la fréquence propre de vibration du verre de la glace (2) sans interférence avec les fréquences propres de vibration des autres pièces mécaniques (3, 4, 10) du dispositif de fixation.

2. Dispositif selon la revendication 1, caractérisé en ce que la cale rigide d'épaisseur réglable (8) est constituée d'un feuilleté de tôles (8a) pelables, d'épaisseurs prédéterminées.

3. Dispositif selon la revendication 2, caractérisé en ce que les tôles (8a) constituant le feuilleté sont solidaires entre elles par une substance faiblement adhésive apte à les rendre pelables et repositionnables.

4. Dispositif selon la revendication 2, caractérisé en ce que la cale pelable (8) est constituée par un cadre de forme et de dimensions sensiblement identiques aux éléments supports (3, 4) entre lesquels il est disposé et en ce qu'il est obtenu par découpe d'un flan de tôles feuilletées (8a).

5. Dispositif selon la revendication 2, caractérisé en ce que la cale pelable (8) est constituée par une pluralité d'entretoises réparties entre les éléments supports (3, 4) sur leur pourtour (3b, 4b) au droit des moyens de serrage mécaniques (10), et obtenues par découpe dans un flan de tôles feuilletées (8).

6. Dispositif selon les revendications 4 ou 5, caractérisé en ce que la cale pelable (8), se présentant sous forme de cadre ou d'entretoises, est pourvue de trous de passage (11) pour des vis de fixation (10) constituant les moyens de serrage, dont une tête (10a) est en appui sur l'un des éléments support (4) et dont le corps (10b) traverse l'élément (4) et la cale pelable (8) pour être rendu solidaire de l'autre élément support (3).

7. Dispositif selon la revendication 2, caractérisé en ce que le feuilleté constituant la cale pelable (8) est réalisé par un empilage de feuilles de cuivre.

8. Dispositif selon la revendication 2, caractérisé en ce que le feuilleté constituant la cale pelable (8) est réalisé par un empilage de feuilles d'acier.

9. Dispositif selon les revendications 7 et 8, caractérisé en ce que les feuilles (8a) constituant le feuilleté ont une épaisseur de 0,5 dixième de mm.

10. Procédé de montage pour la mise en oeuvre du dispositif selon les revendications 1 à 9, remarquable par les étapes suivantes :
(a) Mise en place de la structure porteuse constituée par un premier élément support rigide (3) formant cadre,
(b) Application d'un premier joint souple (5) sur la face interne (3a) du premier élément support (3), dans une feuillure (7) duquel il se loge,
(c) Mise en place d'une glace (2) sur le joint (5),
(d) Mise en place d'une cale rigide (8) d'épaisseur réglable constituée d'un feuilleté de tôles ou feuilles pelables (8a), sur une face interne périphérique (3b) de l'élément (3),
(e) Application d'un second joint souple (6) sur l'autre face (2b) de la glace (2),
(f) Mise en place d'un second élément support rigide (4), dans une feuillure (9) duquel se loge ledit second joint (6),
(g) Introduction de vis (10) dans des trous (11) traversant les premier et second éléments (3 et 4) ainsi que la cale (8),
(h) Serrage des vis (10) jusqu'à mise en butée des éléments (3 et 4) sur la cale (8), dont l'épaisseur est contrôlée en ôtant plus ou moins de feuilles (8a).

11. Ecran équipé d'un dispositif de fixation selon l'une des revendications 1 à 9, mis en oeuvre selon le procédé de la revendication 10.

## Claims

1. A device for fixing (1) a pane of glass (2) between two rigid support elements (3 and 4) forming frames using mechanical tightening means (10), the pane (2) being pressed between the two support elements (3 and 4), by means of two flexible peripheral joints (5) (6) arranged respectively between each of the internal faces (3a, 4a) of these support elements (3, 4) and a corresponding face (2a, 2b) of the pane (2), compression of which is controlled by interposing between the support elements (3, 4) at least one rigid strut (8) against which these elements (3, 4) abut at their nominal torque when the mechanical tightening means (10) are operated, characterised in that the thickness of the strut can be regulated to a chosen compression of the flexible joints (5, 6) so as to adjust the actual frequency of vibration of the glass pane (2) without disrupting the frequencies of the vibrations of the other mechanical parts (3, 4, 10) of the fixing device themselves.

2. A device as claimed in claim 1, characterised in that the rigid strut of regulable thickness (8) comprises laminated sheets (8a) of predetermined thicknesses that may be peeled off.

3. A device as claimed in claim 2, characterised in that the sheets (8a) comprising the laminate are joined to each other by means of a slightly adhesive substance that allows them to be peeled off and repositioned.

4. A device as claimed in claim 2, characterised in that the peel-off strut (8) comprises a frame of a shape and dimensions substantially identical to the support elements (3, 4) between which it is arranged and in that it is obtained by cutting from a blank of laminated sheets (8a).

5. A device as claimed in claim 2, characterised in that the peel-off strut (8) comprises a plurality of cross-pieces distributed between the support elements (3, 4) on their peripheries at right angles to the mechanical tightening means (10) and obtained by cutting from a blank of laminated sheets (8).

6. A device as claimed in claims 4 or 5, characterised in that the peel-off strut (8), in the form of a frame or cross-pieces, is provided with holes (11) through which fixing screws comprising the closing means may be inserted, the heads of which are supported on one of the support elements (4) and the body (10b) of which passes through the element (4) and the peel-off strut (8) to be joined with the other support element (3).

7. A device as claimed in claim 2, characterised in that the laminate forming the peel-off strut (8) is made from a stack of copper sheets.

8. A device as claimed in claim 2, characterised in that the laminate forming the peel-off strut (8) is made from a stack of steel sheets.

9. A device as claimed in claims 7 and 8, characterised in that the sheets (8a) comprising the laminate have a thickness of 0.5 tenths of a millimetre.

10. A method of mounting for implementing the device as claimed in claims 1 to 9, notable for the following steps:
(a) the bearing structure comprising a first rigid support element (3) forming a frame is positioned,
(b) a first flexible joint (5) is applied to the internal face (3a) of the first support element (3), in a rabbet (7) in which it sits,
(c) a pane of glass (20 is positioned on the joint (5),
(d) a rigid strut (8) of a regulable thickness comprising a laminated sheets or peel-off sheets (8a) is positioned on a peripheral internal face (3b) of the element (3),
(e) a second flexible joint (6) is applied on the other face (2b) of the pane (2),
(f) a second rigid support element (4) is placed in a rabbet (9) in which the second joint (6) is housed,
(g) screws (10) are inserted into the holes (11) passing through the first and second elements (3 and 4) and the strut (8),
(h) the screws (10) are tightened until they abut with the elements (3 and 4) on the strut (8), whose thickness is regulated by removing more or fewer sheets (8a).

11. A screen fitted with a fixing device as claimed in one of claims 1 to 9, used in accordance with the method as claimed in claim 10.

## Patentansprüche

1. Vorrichtung (1) zur Befestigung einer Glasscheibe (2) zwischen zwei steifen, einen Rahmen bildenden Halteteilen (3 und 4), mittels einer mechanischen Klemmanordnung (10), wobei die Scheibe (2) zwischen den beiden Halteteilen (3 und 4) mittels zweier elastischer Umfangsdichtungen (5 und 6) eingeklemmt ist, die sich jeweils auf den Innenflachen (3a, 4a) der Halteteile (3, 4) sowie der zugehörigen Seite (2a, 2b) der Scheibe (2) abstützen und deren Druck steuerbar ist durch Zwischenschaltung wenigstens eines steifen Füllstücks (8) zwischen die Halteteile (3, 4), auf dem sich die Halteteile (3, 4) abstützen, wenn eine Kraft mit ihrem Nominalwert auf die mechanische Klemmanordnung (10) einwirkt, dadurch gekennzeichnet, daß das steife Füllstück eine einstellbare Dicke aufweist für eine gewählte Kompression der elastischen Dichtungen (5, 6), so daß die Eigenfrequenz der Schwingung der Glasscheibe (2) einstellbar ist, ohne daß Überlagerungen mit den Eigenfrequenzen der Schwingung der anderen mechanischen Teile (3, 4, 10) der Befestigungsvorrichtung auftreten.

2. Vorrichtung nach Anspruch 1, dadurch gekennzeichnet, daß das steife Füllstück mit einstellbarer Dicke (8) aus einem Stapel zerlegbarer Bleche (8a) vorgegebener Dicken besteht.

3. Vorrichtung nach Anspruch 2, dadurch gekennzeichnet, daß die den Stapel bildenden Bleche (8a) untereinander über eine schwach klebende Substanz verbunden sind, so daß sie einzeln abnehmbar und aufsetzbar sind.

4. Vorrichtung nach Anspruch 2, dadurch gekennzeichnet, daß das zerlegbare Füllstück (8) aus einem Rahmen besteht, der in Gestalt und Abmessung im wesentlichen identisch zu den Halteteilen (3, 4) ist, zwischen denen es angeordnet ist und daß es durch Ausschneiden aus einem Blechstapel (8a) erhalten wird.

5. Vorrichtung nach Anspruch 2, dadurch gekennzeichnet, daß das zerlegbare Füllstück (8) aus einer Vielzahl von Streben besteht, die zwischen den Halteteilen (3, 4) entlang dessen Umfang (3b, 4b) gegenüber der mechanischen Klemmanordnung (10) verteilt sind und durch Ausschneiden aus dem Blechstapel (8) erhalten werden.

6. Vorrichtung nach Ansprüchen 4 oder 5, dadurch gekennzeichnet, daß das zerlegbare Füllstück (8), das die Form eines Rahmens oder von Streben aufweist, mit Durchlaßöffnungen (11) für Befestigungsschrauben (10) versehen ist, welche die Klemmanordnung darstellen und deren Kopf (10a) sich auf einem der Halteteile (4) abstützt und deren Schaft (10b) das Teil (4) und das zerlegbare Füllstück (8) durchsetzt, um fest mit dem anderen Halteteil (3) verbunden zu werden.

7. Vorrichtung nach Anspruch 2, dadurch gekennzeichnet, daß der das zerlegbare Füllstück (8) bildende Stapel aus der Übereinanderanordnung von Kupferplättchen besteht.

8. Vorrichtung nach Anspruch 2, dadurch gekennzeichnet, daß der das zerlegbare Füllstück (8) bildende Stapel aus der Übereinanderanordnung von Stahlplättchen besteht.

9. Vorrichtung nach Ansprüchen 7 oder 8, dadurch gekennzeichnet, daß die den Stapel bildenden Plättchen (8a) eine Dicke von 0,5 Zehntelmillimetern aufweisen.

10. Montageverfahren zum Erhalt einer Vorrichtung nach den Ansprüchen 1 bis 9, gekennzeichnet durch die folgenden Schritte:
(a) Anordnung der Tragstruktur, bestehend aus einem ersten steifen Halteteil (3), das einen Rahmen bildet,
(b) Anordnung einer ersten elastischen Dichtung (5) auf der Innenfläche (3a) des ersten Halteteils (3), wobei sie in eine Nut (7) eingreift,
(c) Anordnen einer Scheibe (2) auf der Dichtung (5),
(d) Anordnen eines steifen Füllstücks (8) einstellbarer Dicke, bestehend aus einem Stapel aus Blechen oder zerlegbaren Plättchen (8a) entlang einer inneren Umfangsfläche (3b) des Teils (3),
(e) Anordnen einer zweiten elastischen Dichtung (6) auf der anderen Seite (2b) der Scheibe (2),
(f) Anordnen eines zweiten steifen Halteteils (4) in einer Nut (9), in welche die zweite Dichtung (6) eingreift,
(g) Einsetzen von Schrauben (10) in die Öffnungen (11), welche die ersten und zweiten Teile (3 und 4) sowie das Füllstück (8) durchsetzen,
(h) Anziehen der Schrauben (10) bis die Teile (3 und 4) auf dem Füllstück (8) anliegen, dessen Dicke durch Abnahme eines oder mehrerer der Plättchen (8a) eingestellt wird.

11. Bildschirm mit einer Befestigungsvorrichtung nach einem der Ansprüche 1 bis 9, hergestellt durch das Verfahren nach Anspruch 10.
